# FASCICULE DE BREVET EUROPEEN

(11) **EP 0 707 260 B1**
(45) Date de publication et mention de la délivrance du brevet: **02.01.2002**
(21) Numéro de dépôt: 95402213.3
(22) Date de dépôt: 04.10.1995
(51) Int. Cl.: G06F 5/06

(54) **Dispositif de mémoire asynchrone à accès séquentiel et procédé de stockage et de lecture correspondant**
Asynchrone Speicheranordnung mit seriellem Zugriff und entsprechendes Speicher- und Leseverfahren
Serial access asynchronous memory device and corresponding storing and reading method

(30) Priorité: 12.10.1994 FR 9412170
(43) Date de publication de la demande: 17.04.1996
(73) Titulaire: FRANCE TELECOM, 75015 Paris (FR)
(72) Inventeur: Majos, Jacques, F-38420 Le Versoud (FR); Weil, Daniel, F-38000 Grenoble (FR)
(74) Mandataire: Casalonga, Axel

(56) Documents cités:
- EP-A- 0 217 486
- EP-A- 0 525 874
- US-A- 5 311 475

## Description

L'invention concerne les mémoires asynchrones à accès séquentiels, en particulier mais non exclusivement les mémoires asynchrones du type premier entré-premier sorti (FIFO en langue anglaise).

Une mémoire est dite asynchrone lorsque les flux de données entrants et sortants sont cadencés par des horloges indépendantes.

L'utilisation de mémoires FIFO asynchrones dans les circuits intégrés présente de multiples avantages, comme notamment l'adaptation de rythme dans des réseaux asynchrones, l'utilisation de fréquences de fonctionnement différentes au sein des circuits, ou le lissage d'un flux de données.

On connaît déjà des mémoires FIFO, ou "piles", asynchrones constituées classiquement de registres "superposés", où, à chaque temps de cycle, chaque mot stocké dans la mémoire est physiquement basculé dans le registre suivant.Tous les registres travaillant en même temps, il en résulte une consommation importante et proportionnelle à la taille de la mémoire.

Par ailleurs le temps de traversée d'un mot dans la mémoire est variable.En effet, il est important quand la FIFO est de grande taille et presque vide, alors qu'il est faible quand celle-ci est presque pleine puisqu'un mot entrant n'a besoin que de "se poser" sur le haut de la pile.

Or cette différence de comportement entre une pile pleine ou vide peut créer des difficultés dans certaines applications.

EP-A-0 217 486 decrit un système de synchronisation se comportant comme une mémoire double port et réduisant les occurences d'erreurs dues à des échantillons asynchrones à un niveau arbitrairementent bas basé sur un fonctionnement métastable.

L'invention a pour but de proposer une mémoire asynchrone à accès séquentiel, en particulier une FIFO, dont la consommation et le temps de traversée sont indépendants de sa taille et de son niveau de remplissage.

Un autre but de l'invention est de diminuer les vitesses de stockage et de lecture, tout en n'étant pas limité par la taille de la mémoire.

Telle que revendiquée, l'invention propose donc un dispositif de mémoire asynchrone à accès séquentiel, comprenant:
- une mémoire à accès aléatoire double port asynchrone,
- un générateur d'adresses d'écriture pour délivrer au port d'entrée de la mémoire, en réponse à des signaux de validation d'écriture, des informations d'adresses d'écriture successives respectivement associées à des données successives à stocker séquentiellement selon un ordre d'écriture prédéterminé,
- un générateur d'adresses de lecture pour délivrer au port de sortie de la mémoire, en réponse à des signaux de validation de lecture, des informations d'adresses de lecture successives respectivement associées à des données successives à lire séquentiellement selon un ordre de lecture prédéterminé. Selon une caractéristique générale de l'invention, le dispositif comprend:
   - des moyens de détection de la stabilité des informations d'adresses délivrées par les générateurs d'adresses, et ,ces moyens de détection délivrant des signaux logiques de stabilité représentatifs de l'activité de chacun desdits générateurs d'adresses
   - des moyens de détermination du niveau de remplissage de la mémoire, délivrant des niveaux de remplissage de ladite mémoire à partir des informations d'adresses stables délivrées par les générateurs d'adresses et desdits signaux logiques de stabilité.

L'utilisation d'une mémoire vive à double port : ("Double Port Random Acces Memory" : DPRAM, en langue anglaise), contribue à résoudre le problème de consommation puisqu'à chaque temps de cycle, les mots stockés dans la mémoire vive ne sont plus décalés physiquement comme dans le cas d'une mémoire à registres. En effet, dans le cas d'une FIFO, les générateurs d'adresses, par exemple des compteurs synchrones, sont incrémentés de 1 à chaque fois qu'un mot entre dans la mémoire et à chaque fois qu'un mot en sort. Ces deux compteurs délivrent alors directement les adresses des cases mémoires de la mémoire vive correspondant aux données à stocker ou à lire.

Lorsque les générateurs d'adresses sont en train d'élaborer de nouvelles adresses, la lecture du contenu des générateurs n'est pas exploitable. En d'autres termes l'adresse fournie par le générateur correspondant n'est pas stable.

Or il est nécessaire de garantir que, lorsque l'on détermine le niveau de remplissage de la mémoire à partir des adresses délivrées, ces dernières, et donc le niveau, soient stables quelles que soient les différences de fréquences et de phases entre les horloges d'entrée et de sortie. L'invention prévoit donc, en combinaison avec la mémoire vive et les générateurs d'adresses, des moyens de détection de la stabilité des adresses délivrées, aux fins de leurs prise en compte pour la détermination du niveau de remplissage de la mémoire à accès séquentiel ainsi formée.

L'invention prévoit avantageusement la détermination de deux niveaux de remplissage, l'un en écriture, valide sur les fronts montants du signal d'horloge d'entrée et l'autre en lecture, valide sur les fronts montants du signal d'horloge de lecture.

En d'autres termes les moyens de détection de stabilité comportent avantageusement un premier moyen de détection élémentaire délivrant un premier signal logique de stabilité représentatif du caractère stable ou instable d'une adresse d'écriture élaborée par le générateur d'adresses d'écriture, et un deuxième moyen de détection élémentaire délivrant un deuxième signal logique de stabilité représentatif du caractère stable ou instable d'une adresse de lecture élaborée par le générateur d'adresses de lecture.

Les moyens de détermination du niveau de remplissage comportent alors un premier moyen élémentaire de détermination du niveau de remplissage en écriture à partir de l'information d'adresse d'écriture délivrée par le générateur d'adresses d'écriture, et de l'information d'adresse de lecture délivrée par le générateur d'adresses de lecture et validée par le deuxième signal logique de stabilité. Ils comportent aussi un deuxième moyen élémentaire de détermination du niveau de remplissage en lecture à partir de l'information d'adresse de lecture délivrée par le générateur d'adresses de lecture et de l'information d'adresse d'écriture délivrée par le générateur d'adresses d'écriture et validée par le premier signal logique de stabilité.

Selon un mode de réalisation de l'invention, le moyen élémentaire de détermination du niveau de remplissage en écriture comporte:
- un premier circuit de commande, recevant le signal d'horloge de cadencement du port d'entrée de la mémoire ainsi que le deuxième signal logique de stabilité, et délivrant un premier signal logique de commande correspondant ayant une première valeur en présence d'un deuxième signal logique de stabilité représentatif du caractère stable de l'adresse de lecture correspondante et une deuxième valeur en présence d'un deuxième signal logique de stabilité représentatif du caractère instable de l'adresse de lecture correspondante,
- un premier moyen de mémoire-verrou, commandé par le premier signal de commande logique pour stocker l'adresse de lecture stable fournie par le générateur d'adresses de lecture, et
- un premier soustracteur relié à la sortie du générateur d'adresses d'écriture ainsi qu'à la sortie du premier moyen de mémoire-verrou.

De même, le moyen élémentaire de détermination du niveau de remplissage en lecture comporte:
- un deuxième circuit de commande, recevant le signal d'horloge de cadencement du port de sortie de la mémoire ainsi que le premier signal logique de stabilité, et délivrant un deuxième signal logique de commande correspondant ayant une première valeur en présence d'un premier signal logique de stabilité représentatif du caractère stable de l'adresse d'écriture correspondante et une deuxième valeur en présence d'un premier signal logique de stabilité représentatif du caractère instable de l'adresse d'écriture correspondante,
- un deuxième moyen de mémoire-verrou, commandé par le deuxième signal de commande logique pour stocker l'adresse d'écriture stable fournie par le générateur d'adresses d'écriture, et
- un deuxième soustracteur relié à la sortie du générateur d'adresses de lecture ainsi qu'à la sortie du deuxième moyen de mémoire-verrou.

Chaque circuit de commande comporte de préférence :
- une entrée de signal pour recevoir le signal logique de stabilité correspondant,
- une entrée d'horloge pour recevoir le signal d'horloge de cadencement correspondant,
- une sortie de signal pour délivrer le signal logique de commande correspondant,
- une sortie d'horloge auxiliaire, reliée à l'entrée d'horloge, pour délivrer au générateur d'adresses correspondant un signal d'horloge auxiliaire de cadencement,
- une première bascule D, dont l'entrée de commande est reliée à l'entrée d'horloge, et dont l'entrée de donnée est reliée à l'entrée de signal,
- une première porte logique NON ET dont les deux entrées sont respectivement reliées à l'entrée de signal, par l'intermédiaire d'un inverseur, et à la sortie non complémentée de la bascule D,
- une deuxième porte logique NON ET dont les deux entrées sont respectivement reliées à l'entrée d'horloge, par l'intermédiaire de premiers moyens de retard choisis, et à la sortie complémentée de la bascule D,
- une troisième porte logique NON ET dont les deux entrées sont respectivement reliées aux deux sorties des première et deuxième portes logiques, et dont la sortie est reliée à la sortie de signal.

Par ailleurs, chaque moyen élémentaire de détermination du niveau de remplissage comporte un circuit de temporisation dont l'entrée est reliée à la sortie de la troisième porte logique NON ET et dont la sortie est reliée à l'entrée de remise à zéro de la bascule D, de façon à initialiser le circuit de commande au rythme du signal logique de commande correspondant.

Cette initialisation de la première bascule au rythme du signal logique de commande permet d'éviter des pertes d'impulsions du signal logique de commande dans certains cas de fonctionnement.

Chaque circuit de temporisation comporte avantageusement une deuxième bascule D, dont l'entrée de commande est reliée à la sortie de signal du circuit de commande correspondant, et dont la sortie non complémentée est reliée à l'entrée de remise à zéro par l'intermédiaire de deuxièmes moyens de retard, les entrées de remise à zéro respectives des deux bascules D étant reliées l'une à l'autre.

De préférence, la sortie d'horloge auxiliaire de chaque circuit de commande est reliée à l'entrée d'horloge par l'intermédiaire des premiers moyens de retard, de façon à délivrer au générateur d'adresses correspondant, un signal d'horloge auxiliaire de cadencement retardé par rapport au signal d'horloge de cadencement d'un premier retard prédéterminé.

Selon un mode de réalisation de l'invention, chaque moyen élémentaire de détection comporte un monostable ayant un troisième retard choisi, et délivrant le signal logique de stabilité correspondant à partir du signal d'horloge de cadencement et du signal de validation correspondants.

Ce troisième retard est au moins égal au premier retard augmenté du temps de réponse du générateur d'adresses correspondant.

Telle que revendiqueé, l'invention a également pour objet un procédé de stockage et de lecture séquentiels asynchrones de données dans une mémoire à accès aléatoire double port asynchrone, dans lequel :
- on délivre respectivement aux ports d'entrée et de sortie de la mémoire, en réponse à des signaux de validation d'écriture et de lecture, des informations d'adresses d'écriture successives respectivement associées à des données successives à stocker séquentiellement selon un ordre d'écriture prédéterminé et délivrées par un générateur d'adresses d'écriture, ainsi que des informations d'adresses de lecture successives respectivement associées à des données successives à lire séquentiellement selon un ordre de lecture prédéterminé et délivrées par un générateur d'adresses de lecture. Selon une caractéristique générale de l'invention,
   - on détecte le caractère stable des informations d'adresses ainsi délivrées de façon à délivrer des signaux de stabilité repsésentatifs de l'activité des générateurs,, et
   - on détermine le niveau de remplissage de la mémoire, à partir de ces informations d'adresses stables, et des signaux de stabilité.

Selon un mode de mise en oeuvre de l'invention, on délivre un premier signal logique de stabilité représentatif du caractère stable ou instable d'une adresse d'écriture élaborée et un deuxième signal logique de stabilité représentatif du caractère stable ou instable d'une adresse de lecture élaborée,
on détermine un niveau de remplissage en écriture à partir de l'information d'adresse d'écriture délivrée et de l'information d'adresse de lecture délivrée et validée par le deuxième signal logique de stabilité, ainsi qu'un niveau de remplissage en lecture à partir de l'information d'adresse de lecture délivrée et de l'information d'adresse d'écriture délivrée et validée par le premier signal logique de stabilité.

Avantageusement, on génère, à partir du signal de cadencement du port d'entrée de la mémoire et du deuxième signal logique de stabilité, un premier signal logique de commande correspondant, ayant une première valeur en présence d'un deuxième signal logique de stabilité représentatif du caractère stable de l'adresse de lecture correspondante et une deuxième valeur en présence d'un deuxième signal logique de stabilité représentatif du caractère instable de l'adresse de lecture correspondante,
- on mémorise, en réponse au premier signal de commande logique, l'adresse de lecture délivrée, cette adresse mémorisée correspondant à une adresse de lecture stable, et
- on effectue la différence entre l'adresse d'écriture délivrée et l'adresse de lecture stable.

De même on génère, à partir du signal de cadencement du port de sortie de la mémoire et du premier signal logique de stabilité, un deuxième signal logique de commande correspondant, ayant une première valeur en présence d'un premier signal logique de stabilité représentatif du caractère stable de l'adresse d'écriture correspondante et une deuxième valeur en présence d'un premier signal logique de stabilité représentatif du caractère instable de l'adresse d'écriture correspondante,
- on mémorise, en réponse au deuxième signal de commande logique, l'adresse d'écriture délivrée, cette adresse mémorisée correspondant à une adresse d'écriture stable, et
- on effectue la différence entre l'adresse de lecture délivrée et l'adresse d'écriture stable.

On délivre de préférence un signal d'horloge auxiliaire de cadencement retardé par rapport au signal d'horloge de cadencement correspondant d'un premier retard prédéterminé, et on délivre les adresses correspondantes en réponse au signal d'horloge auxiliaire de cadencement et au signal de validation correspondants.

Selon un mode de mise en oeuvre de l'invention, on délivre le signal logique de stabilité correspondant à partir du signal d'horloge de cadencement et du signal de validation correspondants, et avec un retard temporel choisi, par exemple au moins égal au premier retard augmenté du temps d'élaboration de l'adresse correspondante.

D'autres avantages et caractéristiques de l'invention apparaîtront à l'examen de la description détaillée d'un mode de réalisation, nullement limitatif, illustré sur les dessins annexés, sur lesquels :
- la figure 1 est un synoptique schématique d'un dispositif de mémoire selon l'invention,
- la figure 2 est un synoptique schématique d'une partie du dispositif de la figure 1,
- la figure 3 est un synoptique illustrant schématiquement plus en détail deux circuits de la figure 2,
- la figure 4 est un synoptique schématique illustrant plus en détail un autre circuit de la figure 2, et
- la figure 5 est un exemple de chronogramme temporel de fonctionnement du circuit de la figure 4.

Bien que l'invention concerne d'une façon générale les mémoires asynchrones à accès séquentiel, on va maintenant décrire la réalisation d'une mémoire du type premier entré-premier sorti (FIFO).

L'homme du métier pourra aisément adapter cette description à la réalisation d'une mémoire du type dernier entré-premier sorti (LIFO en langue anglaise).

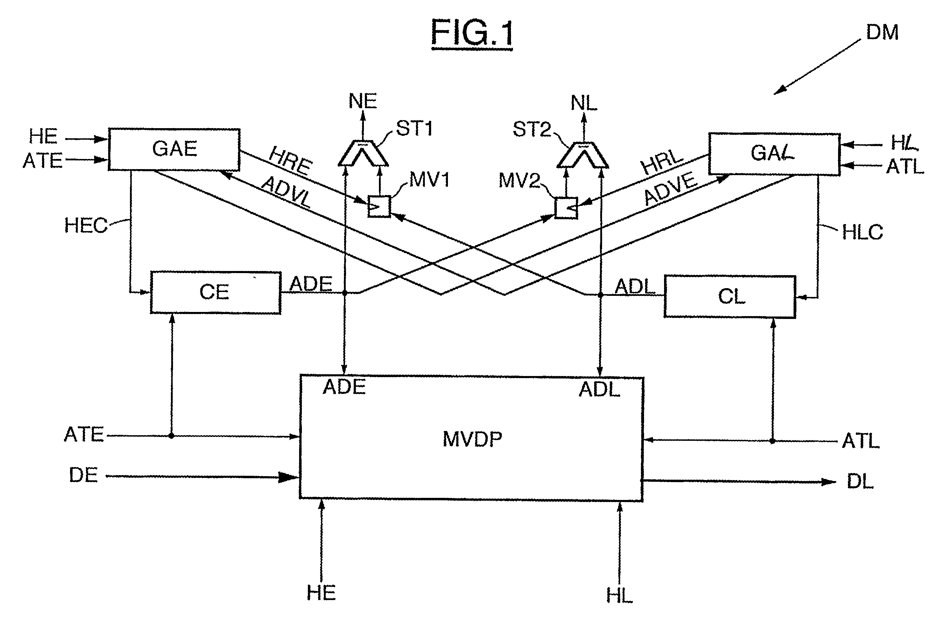

Sur la figure 1, la référence DM désigne un dispositif de mémoire du type FIFO, selon l'invention. Ce dispositif DM comporte une mémoire à accès aléatoire, ou vive, à double port asynchrone, référencée MVDP. Cette mémoire double port comporte un port spécialisé en écriture cadencé par un signal d'horloge d'écriture HE et recevant des données DE à écrire dans la mémoire selon un ordre prédéterminé, ainsi que les adresses d'écriture correspondantes ATE et un signal de validation ou d'autorisation d'écriture ATE.

Cette mémoire MVDP comporte d'une façon analogue un port spécialisé en lecture cadencé par un signal d'horloge de lecture HL, recevant des adresses de lecture ADL correspondant à des données DL à lire, en réponse à un signal de validation ou d'autorisation de lecture ATL, selon un ordre de lecture prédéterminé.

A cette mémoire MVDP sont associés un compteur CE cadencé par un signal d'horloge auxiliaire HEC, tiré du signal d'horloge de cadencement HE du port d'entrée de la mémoire, et recevant par ailleurs le signal de validation d'écriture ATE, pour délivrer les adresses d'écriture ADE.

De même, il est prévu un compteur CL, cadencé par un signal d'horloge auxiliaire HLC, tiré du signal d'horloge de cadencement HL du port de sortie de la mémoire, et recevant par ailleurs le signal de validation de lecture ATL, pour délivrer les adresses de lecture ADL.

Pour le fonctionnement du dispositif de mémoire DM en FIFO, les compteurs d'adresse CE et CL sont incrémentés de 1, à partir d'une même valeur initiale, à chaque fois qu'un mot entre dans la mémoire MVDP et à chaque fois qu'un mot en sort. Ces deux compteurs délivrent ainsi successivement les adresses consécutives correspondant au fonctionnement d'une FIFO. En d'autres termes, les deux compteurs pointent sur les cases mémoire correspondant au haut et au bas de la pile. Ainsi, à chaque temps de cycle, les mots stockés dans la mémoire vive ne sont plus décalés physiquement comme dans le cas d'une FIFO à registre, mais accèdent directement soit à la cellule mémoire désignée, soit au port de sortie.

Il est par ailleurs nécessaire de déterminer le niveau de remplissage du dispositif de mémoire selon l'invention, de façon à. éviter l'écriture d'une donnée dans une FIFO pleine ou de lire une donnée dans une FIFO vide.

Cette détermination est effectuée d'une façon générale à partir de la différence entre les adresses d'écriture et de lecture. Or, il est nécessaire de garantir qu'au moment où l'on effectue cette différence, le résultat soit stable quelles que soient les différences de fréquence et de phases entre les deux horloges de cadencement des deux ports de la mémoire vive.

Dans le mode de réalisation décrit ici, on détermine en fait deux niveaux de remplissage, l'un NE valide sur les fronts montants du signal d'horloge d'écriture HE et l'autre NL, valide sur les fronts montants du signal d'horloge de lecture HL.

Les instants où les deux adresses d'écriture et de lecture sont stables en même temps sont donnés par les fronts montants de deux signaux logiques de commande, respectivement référencés HRE pour le calcul du niveau NE, et HRL pour le calcul du niveau NL. Ces deux signaux logiques de commande HRE et HRL sont générés par deux blocs identiques GAE et GAL qui gèrent d'une manière générale respectivement l'asynchronisme des signaux d'horloge d'écriture et de lecture.

Plus précisément, en écriture, le problème d'instabilité dans la détermination du niveau NE provient de l'information d'adresse de lecture ADL fournie par le compteur CL. En effet, lorsque le compteur d'écriture CE délivre l'adresse d'écriture ADE, celle-ci est par définition stable. Par contre, lorsque l'on cherche à déterminer le niveau NE à partir de cette adresse d'écriture ADE et de l'adresse de lecture ADL lue dans le compteur CL, ce dernier peut éventuellement être en train de mettre à jour une nouvelle adresse de lecture.

De même, en lecture, le problème d'instabilité dans la détermination du niveau NL résulte de l'adresse d'écriture ADE fournie par le compteur CE et non de l'adresse de lecture ADL fournie par le compteur CL qui est par définition stable lorsqu'elle est délivrée par de dernier.

C'est pourquoi, le signal logique de commande HRE est délivré par le bloc GAE en réponse à un signal logique de stabilité ADVL délivré par le bloc GAL et représentatif de l'activité du compteur CL, c'est-à-dire du caractère exploitable ou stable, de l'adresse ADL fournie par ce dernier.

De même, le signal de commande HRL est délivré par le bloc GAL en réponse à un signal logique de stabilité ADVE délivré par le bloc GAE et représentatif de l'activité, c'est-à-dire du caractère exploitable ou stable de l'adresse d'écriture ADE.

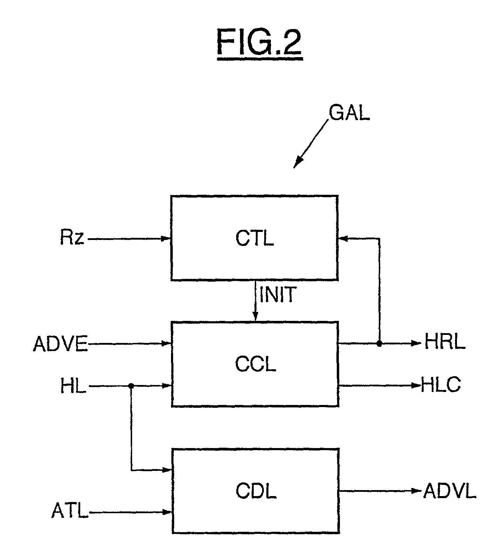

On va maintenant décrire, en se référant plus particulièrement aux figures 2 à 4, un seul des blocs de gestion, à savoir le bloc GAL, à des fins de simplification.

Celui-ci se compose essentiellement d'un circuit de commande CCL qui délivre le signal de commande d'échantillonnage HRL ainsi que le signal d'horloge auxiliaire HLC d'incrémentation du compteur d'adresses de lecture CL, d'un circuit de temporisation associé CTL qui initialise, comme on le verra plus en détail ci-après, le circuit de commande CCL après chaque cycle de lecture et enfin d'un circuit CDL de détection d'instabilité du compteur de lecture.

Le cicuit de temporisation CCL reçoit une impulsion de remise à zéro Rz ainsi que le signal de commande HRL et délivre une impulsion INIT au circuit de commande CCL. Ce dernier reçoit le signal de stabilité ADVE ainsi que le signal HL de cadencement du port de sortie de la mémoire et délivre les signaux HRL et HLC. Le circuit de détection CL reçoit également le signal d'horloge HL ainsi que le signal d'autorisation de lecture ATL et délivre le signal de stabilité ADVL.

La structure du bloc GAE est analogue à celle du bloc GAL. Les signaux ADVE, HL, HRL, HLC, ATL et ADVL, concernant le bloc GAL sont, pour le bloc GAE, respectivement remplacés par les signaux ADVL, HE, HRE, HEC, ATE et ADVE.

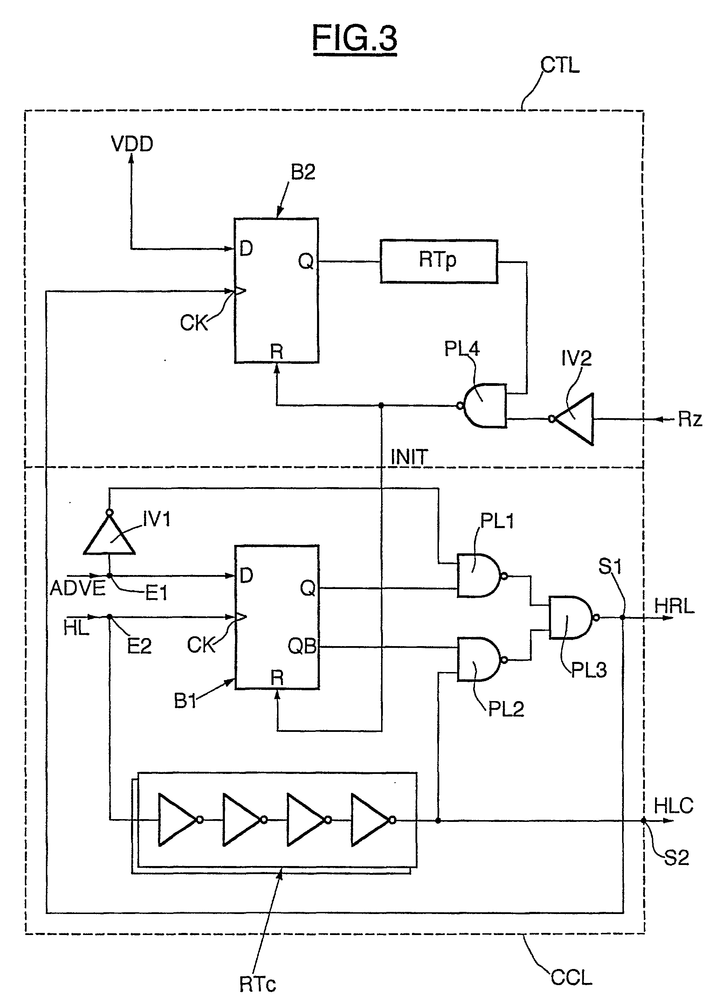

Tel qu'illustré sur la figure 3, le circuit de commande CCL comporte une entrée E1 pour le signal logique ADVE de stabilité de l'adresse d'écriture, une entrée E2 pour le signal d'horloge HL de cadencement du port de sortie de la mémoire vive, une sortie S1 pour le signal logique de commande HRL et une sortie auxiliaire S2 pour le signal d'horloge auxiliaire HLC de cadencement du compteur CL.

Le circuit CCL comporte par ailleurs une première bascule B1 dont l'entrée de données D est reliée à l'entrée E1 et dont l'entrée de commande CK est reliée à l'entrée E2. Les deux sorties de cette bascule B1 sont reliées aux deux entrées d'un multiplexeur formé ici de trois portes logiques NON ET, référencées PL1, PL2, PL3. Plus précisément, l'une des entrées de la première porte logique PL1 est reliée à l'entrée E1 par l'intermédiaire d'un inverseur IV1, tandis que l'autre entrée de cette porte PL1 est reliée à la sortie non complémentée Q de la bascule B1. L'une des entrées de la porte logique PL2 est reliée à la sortie complémentée QB de la bascule B1, tandis que l'autre entrée de la porte logique PL2 est reliée à l'entrée E2 par l'intermédiaire de moyens de retard RTc réalisés ici par une chaîne d'inverseurs en nombre pair, par exemple 4. Le nombre d'inverseurs, qui doit être pair pour le bon fonctionnement logique du circuit CCL, est ajusté de façon à retarder temporellement le signal d'horloge auxiliaire HLC, prélevé en sortie des moyens de retard RTc, d'un retard temporel prédéterminé Tc par rapport au signal d'horloge de cadencement HL.

Les sorties des deux portes logiques PL1 et PL2 sont respectivement reliées aux deux entrées de la troisième porte logique PL3 dont la sortie est reliée à la sortie S1 du circuit CCL.

Lors d'un cycle de lecture, le circuit CCL analyse, sur le front montant du signal d'horloge HL, l'état du signal de stabilité ADVE. Si ce signal ADVE est égal à zéro, signifiant une inactivité du compteur d'adresses d'écriture CE, c'est-à-dire un contenu stable de ce dernier, alors le signal de commande HRL est égal au signal d'horloge HL. Dans le cas contraire, le signal HRL attend le passage à la valeur zéro du signal ADVE, correspondant à l'obtention d'un contenu stable du compteur CE, pour passer à l'état 1. En d'autres termes, le signal ADVE est enregistré sur le front montant du signal HL dans la bascule B1 qui commande le multiplexeur PL1-PL3 de façon à aiguiller sur la sortie S1, soit le signal HL si la sortie non complémentée de la bascule B1 est à zéro, soit le signal ADVE complémenté si la sortie non complémentée Q est à 1.

Le retard Tc, introduit sur le signal HL, doit être choisi supérieur ou égal au temps de réponse de la bascule B1. Ainsi, le signal HL est retardé avant de commander l'entrée du multiplexeur pour éviter l'apparition d'impulsions parasites sur la sortie S1 dues au retard des signaux de commande Q et QB du multiplexeur. Par ailleurs, ces mêmes moyens de retard, en retardant le signal d'horloge auxiliaire HLC par rapport au signal d'horloge HL, permettent au signal logique de stabilité ADVL, généré par le circuit CDL, d'anticiper d'une durée égale à Tc, le changement d'état du compteur CL. On réalise ainsi une marge de sécurité vis-à-vis du caractère exploitable de l'adresse ADL contenue dans le compteur CL.

Le circuit de temporisation CDL comporte une deuxième bascule de type D, référencée B2, dont l'entrée de données est reliée à la tension d'alimentation VDD et dont la sortie non complémentée Q est rebouclée sur l'entrée R de remise à zéro par l'intermédiaire des moyens de retard RTp ainsi que par l'intermédiaire d'une porte logique NON ET référencée PL4. L'autre entrée de la porte logique PL4 reçoit l'impulsion de remise à zéro Rz par l'intermédiaire d'un inverseur IV2. Enfin, la sortie de la porte logique PL3 du multiplexeur du circuit CCL est reliée à l'entrée de commande CK de la bascule B2.

La sortie de la porte logique PL4 est également reliée à l'entrée de remise à zéro R de la bascule B1 du circuit CCL.

Le circuit de temporisation CTL s'analyse en fait comme un monostable qui engendre une impulsion INTT, de durée Tp à chaque front montant du signal de commande HRL. Cette impulsion INTT commande l'entrée de remise à zéro de la bascule B1 du circuit de commande CCL. Une telle initialisation systématique de la bascule B1 au rythme des fronts montants du signal HRL, permet d'éviter la perte d'impulsions sur le signal HRL dans certaines configurations de fonctionnement. On réalise ainsi un contrôle de la largeur de chaque impulsion du signal HRL qui est au moins égal au retard Tp. Par ailleurs, ce retard Tp obtenu ici avec un nombre impair d'inverseurs pour permettre un bon fonctionnement logique du circuit, est choisi ici au plus égal à une demi-période du signal HL.

Chaque compteur d'adresses, en particulier le compteur CL, est un compteur à bascules cadencé par le signal d'horloge auxiliaire. correspondant. L'état des sorties des bascules de chaque compteur définit ainsi directement l'adresse de la cellule-mémoire dans laquelle devra être stockée ou dans laquelle devra être lue la donnée correspondante. Par ailleurs, chaque compteur d'adresse est commandé, c'est-à-dire modifie son contenu, en réponse au signal d'autorisation de lecture ATL ou d'écriture ATE. Le circuit de détection d'instabilité CDL élabore donc à partir du signal d'horloge HL et du signal de validation ATL, le signal de stabilité ADVL représentatif de l'activité du compteur d'adresse de lecture.

Plus précisément, le circuit CDL se compose essentiellement d'un monostable MSL réalisé à partir de deux portes logiques NON ET, référencées PL5 et PL6, mutuellement rebouclées. La sortie de la porte logique PL6 est rebouclée sur l'autre entrée de la porte logique PL5 par l'intermédiaire de moyens de retard RT formés d'un nombre pair d'inverseurs, et par un autre inverseur IV6. La sortie de la porte logique PL5 délivre le signal ADVL, tandis que l'autre entrée de la porte logique PL6 est reliée à la sortie d'une porte logique ET référencée PL7 recevant sur ses deux entrées le signal d'horloge HL et le signal de validation de lecture ATL.

La valeur du retard T imposée par les moyens de retard RT, doit être choisie au moins égale au retard Tc augmenté du temps de réponse du compteur d'adresse correspondant, ici le compteur de lecture.

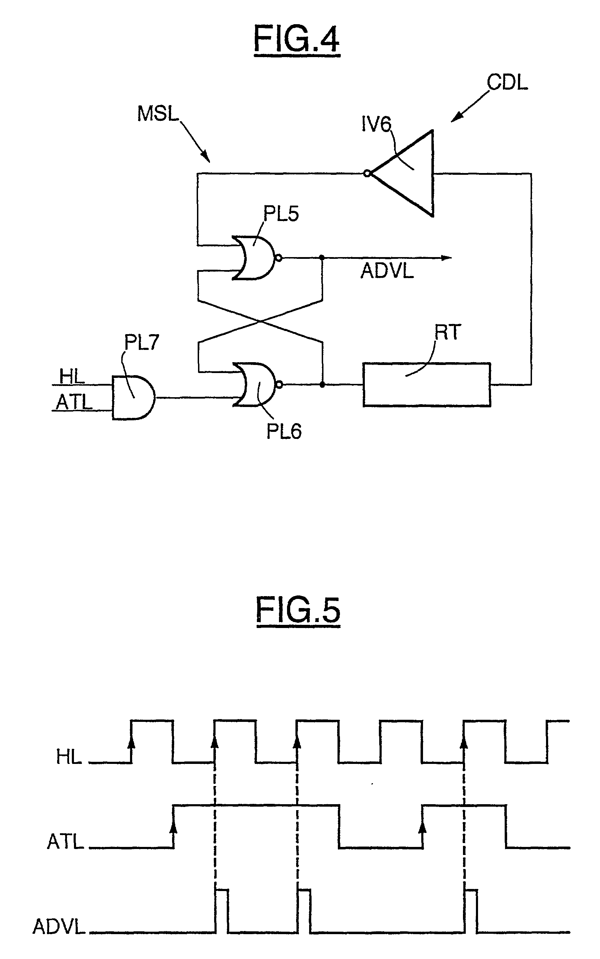

La figure 5 illustre un exemple de chronogramme 7 montrant les différentes impulsions de durée T du signal ADVL par rapport au signal ATL et au front montant du signal d'horloge de cadencement HL.

Si l'on se réfère maintenant plus particulièrement à la figure 1, on voit que les moyens de détermination du niveau NE de remplissage en écriture comportent en outre un élément de mémoire-verrou MV1 ("Latch" en langue anglaise) formé ici d'une bascule D. Cette bascule D est commandée par le signal logique de commande HRE et reçoit sur son entrée donnée l'adresse de lecture ADL fournie par le compteur CL.

La sortie de cet élément de mémoire-verrou MV1 est reliée à l'une des entrées d'un soustracteur ST1 dont l'autre entrée est reliée à la sortie du compteur d'adresse d'écriture CE pour recevoir l'adresse d'écriture ADE. La sortie du soustracteur ST1 fournit le niveau de remplissage en écriture NE.

De même, les moyens de dénomination du niveau NL de remplissage en lecture comportent un élément de mémoire-verrou MV2, tel qu'une bascule D, recevant sur son entrée de données les adresses d'écriture ADE fournies par le compteur CE, et commandé par le signal de commande HRL. Un soustracteur ST2 est connecté en entrée à la sortie de l'élément de mémoire-verrou MV2 et à la sortie du compteur CL pour délivrer en sortie le niveau NL.

Lors d'un cycle de lecture, en réponse aux signaux ADVE et HL, le circuit de commande CCL émet une impulsion de signal HRL, ce qui a pour effet de mémoriser dans la bascule MV2 l'adresse ADE stable fournie par le compteur d'écriture CE. Le niveau de remplissage en lecture NL peut alors être déterminé et le résultat sera stable.

Un fonctionnement analogue est obtenu lors d'un cycle d'écriture, pour le calcul du niveau de remplissage NE à partir de l'adresse ADE fournie par le compteur CE et de l'adresse ADL stable et mémorisée dans la bascule MV1.

L'homme du métier aura remarqué que la valeur NE dû niveau de remplissage en écriture est en fait supérieure ou égale au niveau de remplissage réel de la pile ainsi formée. Néanmoins, ceci est un défaut de précision sans importance puisqu'il garantit effectivement contre l'écriture dans une pile pleine.

Par ailleurs, d'une façon symétrique, la détermination du niveau NL donne une valeur par défaut du niveau de remplissage, imprécision sans inconvénient elle aussi, car elle garantit contre une tentative de lecture d'une FIFO vide.

## Revendications

1. Dispositif de mémoire asynchrone à accès séquentiel, comprenant:
- une mémoire à accès aléatoire double port asynchrone (MVDP),
- un générateur d'adresses d'écriture (CE) pour délivrer au port d'entrée de la mémoire, en réponse à des signaux de validation d'écriture (ATE), des informations d'adresses d'écriture successives (ADE) respectivement associées à des données successives (DE) à stocker séquentiellement selon un ordre d'écriture prédéterminé,
- un générateur d'adresses de lecture (CL) pour délivrer au port de sortie de la mémoire, en réponse à des signaux de validation de lecture (ATL), des informations d'adresses de lecture successives (ADL) respectivement associées à des données successives (DL) à lire séquentiellement selon un ordre de lecture prédéterminé,**caractérisé par le fait qu'**il comprend:
- des moyens (CDE, CDL) de détection de la stabilité des informations d'adresses délivrées par les générateurs d'adresses, lesdits moyens de détection (CD, CDL) délivrant des signaux logiques de stabilité (ADVE, ADVL) représentatif de l'activité de chacun desdits générateurs d'adresses (CE, CL); et
- des moyens de détermination (GAE, GAL, ST1, ST2) du niveau de remplissage du dispositif de mémoire , délivrant des niveaux de remplissage (NE,NL) de ladite mémoire (MVDP), à partir des informations d'adresses stables délivrées par les générateurs d'adresses, et desdits signaux logiques de stabilité (ADVE, ADVL).

2. Dispositif selon la revendication 1, **caractérisé par le fait que** les moyens de détection de stabilité comportent un premier moyen de détection élémentaire (CDE) délivrant un premier signal logique de stabilité (ADVE) représentatif du caractère stable ou instable d'une adresse d'écriture (ADE) élaborée par le générateur d'adresses d'écriture (CE), et un deuxième moyen de détection élémentaire (CDL) délivrant un deuxième signal logique de stabilité (ADVL) représentatif du caractère stable ou instable d'une adresse de lecture (ADL) élaborée par le générateur d'adresses de lecture (CL),
**par le fait que** les moyens de détermination du niveau de remplissage comportent un premier moyen élémentaire (GAE, ST1, MV1) de détermination du niveau (NE) de remplissage en écriture à partir de l'information d'adresse d'écriture (ADE) délivrée par le générateur d'adresses d'écriture (CE) et de l'information d'adresse de lecture (ADL) délivrée par le générateur d'adresses de lecture (CL) et validée par le deuxième signal logique de stabilité (ADVL), ainsi qu'un deuxième moyen élémentaire (GAL, ST2, MV2) de détermination du niveau (NL) de remplissage en lecture à partir de l'information d'adresse de lecture (ADL) délivrée par le générateur d'adresses de lecture (CL) et de l'information d'adresse d'écriture (ADE) délivrée par le générateur d'adresses d'écriture (CE) et validée par le premier signal logique de stabilité (ADVE).

3. Dispositif selon la revendication 2, **caractérisé par le fait que** le moyen élémentaire de détermination du niveau de remplissage en écriture comporte :
- un premier circuit de commande recevant le signal d'horloge (HE) de cadencement du port d'entrée de la mémoire (MVDP) ainsi que le deuxième signal logique de stabilité (ADVL) et délivrant un premier signal logique de commande (HRE) correspondant ayant une première valeur en présence d'un deuxième signal logique de stabilité représentatif du caractère stable de l'adresse de lecture correspondante et une deuxième valeur en présence d'un deuxième signal logique de stabilité représentatif du caractère instable de l'adresse de lecture correspondante,
- un premier moyen de mémoire-verrou (MV1), commandé par le premier signal de commande logique (HRE) pour stocker l'adresse de lecture stable fournie par le générateur d'adresses de lecture, et
- un premier soustracteur (ST1) relié à la sortie du générateur d'adresses d'écriture ainsi qu'à la sortie du premier moyen de mémoire-verrou,
et **par le fait que** le moyen élémentaire de détermination du niveau de remplissage en lecture comporte:
- un deuxième circuit de commande (CCL) recevant le signal d'horloge (HL) de cadencement du port de sortie de la mémoire ainsi que le premier signal logique de stabilité (ADVE) et délivrant un deuxième signal logique de commande correspondant (HRL) ayant une première valeur en présence d'un premier signal logique de stabilité représentatif du caractère stable de l'adresse d'écriture correspondante et une deuxième valeur en présence d'un premier signal logique de stabilité représentatif du caractère instable de l'adresse d'écriture correspondante,
- un deuxième moyen de mémoire-verrou (MV2), commandé par le deuxième signal de commande logique pour stocker l'adresse d'écriture stable fournie par le générateur d'adresses d'écriture, et
- un deuxième soustracteur (ST2) relié à la sortie du générateur d'adresses de lecture ainsi qu'à la sortie du deuxième moyen de mémoire-verrou.

4. Dispositif selon la revendication 3, **caractérisé par le fait que** chaque circuit de commande (CCL) comporte :
- une entrée de signal (E1) pour recevoir le signal logique de stabilité correspondant (ADVE),
- une entrée d'horloge (E2) pour recevoir le signal d'horloge de cadencement correspondant (HL),
- une sortie de signal (S1) pour délivrer le signal logique de comande correspondant (HRL),
- une sortie d'horloge auxiliaire (S2), reliée à l'entrée d'horloge, pour délivrer un signal d'horloge auxiliaire de cadencement (HLC) au générateur d'adresses correspondant (CL),
- une première bascule D (B1), dont l'entrée de commande est reliée à l'entrée d'horloge, et dont l'entrée de donnée (D) est reliée à l'entrée de signal ,
- une première porte logique NON ET (PL1) dont les deux entrées sont respectivement reliées à l'entrée de signal par l'intermédiaire d'un inverseur et à la sortie non complémentée de la bascule D (B1),
- une deuxième porte logique NON ET (PL2) dont les deux entrées sont respectivement reliées à l'entrée d'horloge par l'intermédiaire de premiers moyens de retard choisis (RTc), et à la sortie complémentée de la bascule D,
- une troisième porte logique NON ET (PL3) dont les deux entrées sont respectivement reliées aux deux sorties des première et deuxième portes logiques, et dont la sortie est reliée à la sortie de signal,
et **par le fait que** chaque moyen élémentaire de détermination du niveau de remplissage comporte un circuit de temporisation (CTL) dont l'entrée est reliée à la sortie de la troisième porte logique NON ET et dont la sortie est reliée à l'entrée de remise à zéro (R) de la bascule D (B1), de façon à initialiser le circuit de commande au rythme du signal logique de commande correspondant (HRL).

5. Dispositif selon la revendication 4 , **caractérisé par le fait que** chaque circuit de temporisation (CTL) comporte une deuxième bascule D (B2), dont l'entrée de commande (CK) est reliée à la sortie de signal (S1) du circuit de commande correspondant (CCL), et dont la sortie non complémentée (Q) est reliée à l'entrée de remise à zéro par l'intermédiaire de deuxièmes moyens de retard (RTp), les entrées de remise à zéro respectives des deux bascules D étant reliées l'une à l'autre.

6. Dispositif selon la revendication 4 ou 5, **caractérisé par le fait que** la sortie d'horloge auxiliaire (S2) de chaque circuit de commande (CCL) est reliée à l'entrée d'horloge (E2) par l'intermédiaire des premiers moyens de retard (RTc), de façon à délivrer au générateur d'adresses correspondant, un signal d'horloge auxiliaire de cadencement (HLC) retardé par rapport au signal d'horloge de cadencement d'un premier retard prédéterminé.

7. Dispositif selon l'une des revendications 2 à 6, **caractérisé par le fait que** chaque moyen élémentaire de détection comporte un monostable (MSL) ayant un troisième retard choisi (T), et délivrant le signal logique de stabilité correspondant (ADVL) à partir du signal d'horloge de cadencement (HL) et du signal de validation (ATL) correspondants.

8. Dispositif selon la revendication 6 prise en combinaison avec la revendication 7, **caractérisé par le fait que** le troisième retard est au moins égal au premier retard augmenté du temps de réponse du générateur d'adresses correspondant.

9. Dispositif selon l'une des revendications précédentes, **caractérisé par le fait qu'**il forme une mémoire du type premier entré-premier sorti, les générateurs d'adresses étant des compteurs incrémentés à partir d'une même valeur initiale.

10. Procédé de stockage et de lecture séquentiels asynchrones de données dans une mémoire, **caractérisé par le fait que**, la mémoire étant une mémoire à accès aléatoire double port asynchrone,
- on délivre respectivement aux ports d'entrée et de sortie de la mémoire, en réponse à des signaux de validation d'écriture et de lecture, des informations d'adresses d'écriture successives respectivement associées à des données successives à stocker séquentiellement selon un ordre d'écriture prédéterminé, et délivrées par un générateur d'adresses d'écriture (CE), ainsi que des informations d'adresses de lecture successives respectivement associées à des données successives à lire séquentiellement selon un ordre de lecture prédéterminé et délivrées par un générateur d'adresses de lecture (CL), **caractérisé en ce que** l'
- on détecte le caractère stable des informations d'adresses ainsi délivrées afin de délivrer des signaux de stabilité (ADVE,ADVL) représentatif de l'activité desdits générateurs d'adresses (CE,CL), et
- on détermine le niveau de remplissage de la mémoire à partir de ces informations d'adresses stables et desdits signaux de stabilité (ADVE,ADVL).

11. Procédé selon la revendication 10, **caractérisé par le fait qu'**on délivre un premier signal logique de stabilité représentatif du caractère stable ou instable d'une adresse d'écriture élaborée et un deuxième signal logique de stabilité représentatif du caractère stable ou instable d'une adresse de lecture élaborée,
on détermine un niveau de remplissage en écriture à partir de l'information d'adresse d'écriture délivrée et de l'information d'adresse de lecture délivrée et validée par le deuxième signal logique de stabilité, ainsi qu'un niveau de remplissage en lecture à partir de l'information d'adresse de lecture délivrée et de l'information d'adresse d'écriture délivrée et validée par le premier signal logique de stabilité.

12. Procédé selon la revendication 11, **caractérisé par le fait qu'**on génère, à partir du signal de cadencement du port d'entrée de la mémoire et du deuxième signal logique de stabilité, un premier signal logique de commande correspondant, ayant une première valeur en présence d'un deuxième signal logique de stabilité représentatif du caractère stable de l'adresse de lecture correspondante et une deuxième valeur en présence d'un deuxième signal logique de stabilité représen tatif du caractère instable de l'adresse de lecture correspondante,
- on mémorise, en réponse au premier signal de commande logique, l'adresse de lecture délivrée, cette adresse mémorisée correspondant à une adressé de lecture stable,
- on effectue la différence entre l'adresse d'écriture délivrée et l'adresse de lecture stable,
et **par le fait qu'**on génère, à partir du signal de cadencement du port de sortie de la mémoire et du premier signal logique de stabilité, un deuxième signal logique de commande correspondant, ayant une première valeur en présence d'un premier signal logique de stabilité représentatif du caractère stable de l'adresse d'écriture correspondante et une deuxième valeur en présence d'un premier signal logique de stabilité représentatif du caractère instable de l'adresse d'écriture correspondante,
- on mémorise, en réponse au deuxième signal de commande logique, l'adresse d'écriture délivrée, cette adresse mémorisée correspondant à une adresse d'écriture stable,
- on effectue la différence entre l'adresse de lecture délivrée et l'adresse d'écriture stable.

13. Procédé selon la revendication 11 ou 12, **caractérisé par le fait qu'**on délivre un signal d'horloge auxiliaire de cadencement retardé par rapport au signal d'horloge de cadencement correspondant d'un premier retard prédéterminé, et **par le fait qu'**on délivre les adresses correspondantes en réponse au signal d'horloge auxiliaire de cadencement et au signal de validation correspondants.

14. Procédé selon l'une des revendications 10 à 13, **caractérisé par le fait qu'**on délivre le signal logique de stabilité correspondant à partir du signal d'horloge de cadencement et du signal de validation correspondants, et avec un retard temporel choisi.

15. Procédé selon les revendications 13 et 14 prises en combinaison, **caractérisé par le fait que** le retard temporel est choisi au moins égal au premier retard augmenté du temps d'élaboration de l'adresse correspondante.

16. Procédé selon l'une des revendications 10 à 15, **caractérisé par le fait que** l'on stocke et on lit les données dans le même ordre.

## Patentansprüche

1. Vorrichtung für einen asynchronen Speicher mit sequentiellem Zugriff, mit:
- einem asynchronen RAM-Speicher mit Doppelport (MVDP),
- einem Schreibadressengenerator (CE), welcher als Antwort auf Schreibfreigabesignale (ATE) an den Eingangsport des Speichers aufeinanderfolgende Schreibadresseninformationen (ADE) liefert, welche jeweils aufeinanderfolgenden, nach einer vorbestimmten Schreibreihenfolge sequentiell zu speichernden Daten (DE) zugeordnet sind,
- einem Leseadressengenerator (CL), welcher als Antwort auf Lesefreigabesignale (ATL) an den Ausgangsport des Speichers aufeinanderfolgende Leseadresseninformationen (ADL) liefert, welche jeweils aufeinanderfolgenden, nach einer vorbestimmten Lesereihenfolge sequentiell zu lesenden Daten (DL) zugeordnet sind,
**gekennzeichnet durch**
- Mittel (CDE, CDL) zur Erkennung der Stabilität der von den Adressengeneratoren gelieferten Adresseninformationen, wobei diese Erkennungsmittel (CDE, CDL) logische Stabilitätssignale (ADVE, ADVL) liefern, die für die Tätigkeit von jedem der Adressengeneratoren (CE, CL) repräsentativ sind, und
- Mittel (GAE, GAL, ST1, ST2) zur Feststellung des Speicherfüllzustandes, welche Füllzustände (NE, NL) des Speichers (MVDP) anhand der stabilen, von den Adressengeneratoren gelieferten Adresseninformationen und der logischen Stabilitätssignale (ADVE, ADVL) liefern.

2. Vorrichtung nach Anspruch 1, **dadurch gekennzeichnet, dass** die Mittel zur Erkennung der Stabilität aufweisen ein erstes elementares Erkennungsmittel (CDE) zur Lieferung eines ersten logischen Stabilitätssignals (ADVE), welches für den stabilen oder instabilen Zustand einer vom Schreibadressengenerator (CE) erstellten Schreibadresse (ADE) repräsentativ ist, und ein zweites elementares Erkennungsmittel (CDL) zur Lieferung eines zweiten logischen Stabilitätssignals (ADVL), welches für den stabilen oder instabilen Zustand einer vom Leseadressengenerator (CL) erstellten Leseadresse (ADL) repräsentativ ist,
dass die Mittel zur Feststellung des Speicherfüllzustandes aufweisen ein erstes elementares Mittel (GAE, ST1, MV1) zur Feststellung des Schreibfüllzustands (NE) anhand der vom Schreibadressengenerator (CE) gelieferten Schreibadresseninformation (ADE) und der vom Leseadressengenerator (CL) gelieferten und durch das zweite logische Stabilitätssignal (ADVL) freigegebenen Leseadresseninformation (ADL) sowie ein zweites elementares Mittel (GAL, ST2, MV2) zur Feststellung des Lesefüllzustandes (NL) anhand der vom Leseadressengenerator (CL) gelieferten Leseadresseninformation (ADL) und der vom Schreibadressengenerator (CE) gelieferten und durch das erste logische Stabilitätssignal (ADVE) freigegebenen Schreibadresseninformation (ADE).

3. Vorrichtung nach Anspruch 2, **dadurch gekennzeichnet, dass** das elementare Mittel zur Feststellung des Schreibfüllzustandes aufweist:
- einen ersten Steuerkreis, welcher das Taktsignal (HE) für das Takten des Eingangsports des Speichers (MDVP) sowie das zweite logische Stabilitätssignal (ADVL) empfängt und ein erstes entsprechendes logisches Steuersignal (HRE) liefert, das einen ersten Wert in Anwesenheit eines zweiten, für den stabilen Zustand der entsprechenden Leseadresse repräsentativen logischen Stabilitätssignals und einen zweiten Wert in Anwesenheit eines zweiten, für den instabilen Zustand der entsprechenden Leseadresse repräsentativen logischen Stabilitätssignals hat,
- ein erstes Latchmittel (MV1), das durch das erste logische Steuersignal (HRE) zur Speicherung der stabilen, vom Leseadressengenerator gelieferten Leseadresse gesteuert wird, und
- einen ersten, mit dem Ausgang des Schreibadressengenerators sowie mit dem Ausgang des ersten Latchmittels verbundenen Subtrahierer (ST1),
und dass das elementare Mittel zur Feststellung des Lesefüllzustandes aufweist:
- einen zweiten Steuerkreis (CCL), welcher das Taktsignal (HL) für das Takten des Ausgangsports des Speichers sowie das erste logische Stabilitätssignal (ADVE) empfängt und ein zweites entsprechendes logisches Steuersignal (HRL) liefert, der einen ersten Wert in Anwesenheit eines ersten, für den stabilen Zustand der entsprechenden Schreibadresse repräsentativen logischen Stabilitätssignals und einen zweiten Wert in Anwesenheit eines ersten, für den instabilen Zustand der entsprechenden Schreibadresse repräsentativen logischen Stabilitätssignals hat,
- ein zweites Latchmittel (MV2), das durch das zweite logische Steuersignal zur Speicherung der stabilen, vom Schreibadressengenerator gelieferten Schreibadresse gesteuert wird, und
- einen zweiten, mit dem Ausgang des Leseadressengenerators sowie mit dem Ausgang des zweiten Latchmittels verbundenen Subtrahierer (ST2).

4. Vorrichtung nach Anspruch 3, **dadurch gekennzeichnet, dass** jeder Steuerkreis (CCL) aufweist:
- einen Signaleingang (E1) zum Empfang des entsprechenden logischen Stabilitätssignals (ADVE),
- einen Taktgebereingang (E2) zum Empfang des entsprechenden taktenden Taktsignals (HL),
- einen Signalausgang (S1) zur Lieferung des entsprechenden logischen Steuersignals (HRL),
- einen mit dem Taktgebereingang verbundenen ergänzenden Taktgeberausgang (S2) zur Lieferung eines ergänzenden taktenden Taktsignals (HLC) an den entsprechenden Adressengenerator (CL),
- einen ersten D-Flipflop (B1), dessen Steuereingang mit dem Taktgebereingang und dessen Dateneingang (D) mit dem Signaleingang verbunden sind,
- eine erste NICHT-UND-Schaltung (PL1), deren beide Eingänge jeweils mit dem Signaleingang durch einen Inverter und mit dem nicht ergänzten Ausgang des D-Flipflops (B1) verbunden sind,
- eine zweite NICHT-UND-Schaltung (PL2), deren beide Eingänge jeweils mit dem Taktgebereingang durch erste gewählte Verzögerungsmittel (RTc) und mit dem ergänzten Ausgang des D-Flipflops verbunden sind,
- eine dritte NICHT-UND-Schaltung (PL3), deren beide Eingänge jeweils mit den beiden Ausgängen der ersten und zweiten Torschaltungen und deren Ausgang mit dem Signalausgang verbunden sind,
und dass jedes elementare Mittel zur Feststellung des Füllzustandes einen Verzögerungskreis(CTL) aufweist, dessen Eingang mit dem Ausgang der dritten NICHT-UND Schaltung und dessen Ausgang mit dem Eingang der Rückstellung (R)des D-Flipflops (B1) verbunden sind, so dass der Steuerkreis auf den Taktzyklus des entsprechenden logischen Steuersignals (HRL) initialisiert wird.

5. Vorrichtung nach Anspruch 4, **dadurch gekennzeichnet, dass** jeder Verzögerungskreis (CTL) einen zweiten D-Flipflop (B2) aufweist, dessen Steuereingang (CK) mit dem Ausgang des Signals (S1) des entsprechenden Steuerkreises (CCL) und dessen nicht ergänzter Ausgang (Q) über zweite Verzögerungsmittel (RTp) mit dem Rückstelleingang verbunden sind, wobei die jeweiligen Rückstelleingänge des beiden D-Flipflops miteinander verbunden sind.

6. Vorrichtung nach Anspruch 4 oder 5, **dadurch gekennzeichnet, dass** der ergänzende Taktgeberausgang (S2) jedes Steuerkreises (CCL) über die ersten Verzögerungsmittel (RTc) mit dem Taktgebereingang (E2) verbunden ist, so dass er dem entsprechenden Adressengenerator ein dem ersten taktenden Taktsignal gegenüber um eine vorbestimmte Verzögerung verzögertes ergänzendes taktendes Taktsignal (HLC) liefert.

7. Vorrichtung nach einem der Ansprüche 2 bis 6, **dadurch gekennzeichnet, dass** jedes elementare Erkennungsmittel einen eine dritte gewählte Verzögerung (T) aufweisenden Univibrator (MSL) aufweist, der das entsprechende logische Stabilitätssignal (ADVL) anhand der entsprechenden taktenden Takt- (HL) und Freigabesignale (ATL) liefert.

8. Vorrichtung nach mit Anspruch 7 kombinierten Anspruch 6, **dadurch gekennzeichnet, dass** die dritte Verzögerung mindestens der ersten, um die Ansprechzeit des entsprechenden Adressengenerators erhöhten Verzögerung entspricht.

9. Vorrichtung nach einem der vorhergehenden Ansprüche, **dadurch gekennzeichnet, dass** sie einen Speicher der FIFO-Art bildet, wobei die Adressengeneratoren von einem selben Grundwert ausgehend inkrementierte Zähler sind.

10. Verfahren zur sequentiellen und asynchronen Speicherung und zum Lesen von Daten in einem Speicher, wobei der Speicher ein asynchroner Doppelport-Speicher mit wahlfreiem Zugriff ist, wobei
- als Antwort auf Schreib- und Lesefreigabesignale den jeweiligen Eingangs- und Ausgangsports des Speichers aufeinanderfolgende Schreibadresseninformationen, welche jeweils aufeinanderfolgenden, nach einer vorbestimmten Schreibreihenfolge sequentiell zu speichernden und von einem Schreibadressengenerator (CE) gelieferten Daten zugeordnet sind, sowie aufeinanderfolgende Leseadresseninformationen geliefert werden, welche jeweils aufeinanderfolgenden, nach einer vorbestimmten Lesereihenfolge sequentiell zu lesenden und von einem Leseadressengenerator (CL) gelieferten Daten zugeordnet sind, **dadurch gekennzeichnet,**
- **dass** der stabile Zustand der so gelieferten Adresseninformationen erkannt wird, so dass für die Tätigkeit der Adressengeneratoren (CE, CL) repräsentative Stabilitätssignale (ADVE, ADVL) geliefert werden, und
- **dass** der Speicherfüllzustand anhand dieser stabilen Adresseninformationen und der Stabilitätssignale (ADVE, ADVL) festgestellt wird.

11. Verfahren nach Anspruch 10, **dadurch gekennzeichnet, dass** ein erstes, für den stabilen oder instabilen Zustand einer erstellten Schreibadresse repräsentatives logisches Stabilitätssignal und ein zweites, für den stabilen oder instabilen Zustand einer erstellten Leseadresse repräsentatives logisches Stabilitätssignal geliefert werden, und dass
anhand der gelieferten Schreibadresseninformation und der gelieferten und durch das zweite logische Stabilitätssignal freigegebenen Leseadresseninformation ein Schreibfüllzustand und anhand der gelieferten Leseadresseninformation und der gelieferten und durch das erste logische Stabilitätssignal freigegebenen Schreibadresseninformation ein Lesefüllzustand festgestellt werden.

12. Verfahren nach Anspruch 11, **dadurch gekennzeichnet,**
- **dass** anhand des Taktsignals des Speichereingangsports und des zweiten logischen Stabilitätssignals ein erstes entsprechendes logisches Steuersignal erzeugt wird, welches in Anwesenheit eines zweiten, für den stabilen Zustand der entsprechenden Leseadresse repräsentativen logischen Stabilitätssignals einen ersten Wert und in Anwesenheit eines zweiten, für den instabilen Zustand der entsprechenden Leseadresse repräsentativen logischen Stabilitätssignals einen zweiten Wert innehat,
- **dass** als Antwort auf das erste logische Steuersignal die gelieferte Leseadresse gespeichert wird, wobei diese gespeicherte Adresse einer stabilen Leseadresse entspricht,
- **dass** die Differenz zwischen der gelieferten Schreibadresse und der stabilen Leseadresse ermittelt wird
und dadurch dass anhand des Taktsignals des Speicherausgangsports und des ersten logischen Stabilitätssignals ein zweites entsprechendes logisches Steuersignal erzeugt wird, welches in Anwesenheit eines ersten, für den stabilen Zustand der entsprechenden Schreibadresse repräsentativen logischen Stabilitätssignals einen ersten Wert und in Anwesenheit eines ersten, für den instabilen Zustand der entsprechenden Schreibadresse repräsentativen logischen Stabilitätssignals einen zweiten Wert innehat,
- **dass** als Antwort auf das zweite logische Steuersignal die gelieferte Schreibadresse gespeichert wird, wobei diese gespeicherte Adresse einer stabilen Schreibadresse entspricht, und
- **dass** die Differenz zwischen der gelieferten Leseadresse und der stabilen Schreibadresse ermittelt wird.

13. Verfahren nach Anspruch 11 oder 12, **dadurch gekennzeichnet, dass** ein ergänzendes, dem entsprechenden taktenden Taktsignal gegenüber um eine vorbestimmte Verzögerung verzögertes taktendes Taktsignal geliefert wird und dass die entsprechenden Adressen als Antwort auf das entsprechende taktende Taktsignal und das entsprechende Freigabesignal abgegeben werden.

14. Verfahren nach einem der Ansprüche 10 bis 13, **dadurch gekennzeichnet, dass** das entsprechende logische Stabilitätssignal anhand des entsprechenden taktenden Taktsignals und des entsprechenden Freigabesignals mit einer gewählten Zeitverzögerung geliefert wird.

15. Verfahren nach den kombinierten Ansprüchen 13 und 14, **dadurch gekennzeichnet, dass** die Zeitverzögerung so gewählt wird, dass sie mindestens der ersten, um die Erstellungszeit für die entsprechende Adresse erhöhten Verzögerung entspricht.

16. Verfahren nach einem der Ansprüche 10 bis 15, **dadurch gekennzeichnet, dass** die Daten in der selben Reihenfolge gespeichert und gelesen werden.

## Claims

1. Sequential-access asynchronous memory device, comprising:
- an asynchronous double-port random access memory (MVDP),
- a write address generator (CE) for delivering to the input port of the memory, in response to write enable signals (ATE), successive write address information (ADE) respectively associated with successive data (DE) to be stored sequentially in a predetermined order of writing,
- a read address generator (CL) for delivering to the output port of the memory, in response to read enable signals (ATL), successive read address information (ADL) respectively associated with successive data (DL) to be read sequentially in a predetermined order of reading, **characterized in that** it comprises:
- means (CDE, CDL) for detecting the stability of the address information delivered by the address generators, the said means of detection (CD, CDL) delivering stability logic signals (ADVE, ADVL) representative of the activity of each of the said address generators (CE, CL); and
- means (GAE, GAL, ST1, ST2) for determining the level of fill of the memory device delivering levels (NE, NL) of fill of the said memory (MVDP), from the stable address information delivered by the address generators and from the said stability logic signals (ADVE, ADVL).

2. Device according to Claim 1, **characterized in that** the stability detection means include a first elementary detection means (CDE) delivering a first stability logic signal (ADVE) representative of the stable or unstable nature of a write address (ADE) produced by the write address generator (CE), and a second elementary detection means (CDL) delivering a second stability logic signal (ADVL) representative of the stable or unstable nature of a read address (ADL) produced by the read address generator (CL),
**in that** the means for determining the level of fill include a first elementary means (GAE, ST1, MV1) of determining the level (NE) of fill in write mode from the write address information item (ADE) delivered by the write address generator (CE) and from the read address information item (ADL) delivered by the read address generator (CL) and enabled by the second stability logic signal (ADVL), as well as a second elementary means (GAL, ST2, MV2) of determining the level (NL) of fill in read mode from the read address information item (ADL) delivered by the read address generator (CL) and from the write address information item (ADE) delivered by the write address generator (CE) and enabled by the first stability logic signal (ADVE).

3. Device according to Claim 2, **characterized in that** the elementary means of determining the level of fill in write mode includes:
- a first control circuit receiving the clock signal (HE) for gating the input port of the memory (MVDP) as well as the second stability logic signal (ADVL) and delivering a first corresponding control logic signal (HRE) having a first value in the presence of a second stability logic signal representative of the stable nature of the corresponding read address and a second value in the presence of a second stability logic signal representative of the unstable nature of the corresponding read address,
- a first latch means (MV1), controlled by the first logic control signal (HRE) for storing the stable read address provided by the read address generator, and
- a first subtracter (ST1) connected to the output of the write address generator as well as to the output of the first latch means,
and **in that** the elementary means of determining the level of fill in read mode includes:
- a second control circuit (CCL) receiving the clock signal (HL) for gating the output port of the memory as well as the first stability logic signal (ADVE) and delivering a second corresponding control logic signal (HRL) having a first value in the presence of a first stability logic signal representative of the stable nature of the corresponding write address and a second value in the presence of a first stability logic signal representative of the unstable nature of the corresponding write address,
- a second latch means (MV2), controlled by the second logic control signal for storing the stable write address provided by the write address generator, and
- a second subtracter (ST2) connected to the output of the read address generator as well as to the output of the second latch means.

4. Device according to Claim 3, **characterized in that** each control circuit (CCL) includes:
- a signal input (E1) for receiving the corresponding stability logic signal (ADVE),
- a clock input (E2) for receiving the corresponding gating clock signal (HL),
- a signal output (S1) for delivering the corresponding control logic signal (HRL),
- an auxiliary clock output (S2), connected to the clock input, for delivering an auxiliary gating clock signal (HLC) to the corresponding address generator (CL),
- a first D flip-flop (B1), whose control input is connected to the clock input, and whose data input (D) is connected to the signal input,
- a first NAND logic gate (PL1), whose two inputs are connected respectively to the signal input by way of an inverter and to the non-complemented output of the D flip-flop (B1),
- a second NAND logic gate (PL2), whose two inputs are connected respectively to the clock input by way of first chosen delay means (RTc), and to the complemented output of the D flip-flop,
- a third NAND logic gate (PL3), whose two inputs are connected respectively to the two outputs of the first and second logic gate, and whose output is connected to the signal output,
and **in that** each elementary means of determining the level of fill includes a timing circuit (CTL), whose input is connected to the output of the third NAND logic gate and whose output is connected to the reset input (R) of the D flip-flop (B1), so as to initialize the control circuit in tempo with the corresponding control logic signal (HRL).

5. Device according to Claim 4, **characterized in that** each timing circuit (CTL) includes a second D flip-flop (B2), whose control input (CK) is connected to the signal output (S1) of the corresponding control circuit (CCL) and whose non-complemented output (Q) is connected to the reset input by way of second delay means (RTp), the respective reset inputs of the two D flip-flops being connected to one another.

6. Device according to Claim 4 or 5, **characterized in that** the auxiliary clock output (S2) of each control circuit (CCL) is connected to the clock input (E2) by way of the first delay means (RTc), so as to deliver to the corresponding address generator an auxiliary gating clock signal (HLC) delayed with respect to the gating clock signal by a first predetermined delay.

7. Device according to one of Claims 2 to 6, **characterized in that** each elementary means of detection includes a monostable (MSL) having a third chosen delay (T), and delivering the corresponding stability logic signal (ADVL) from the corresponding gating clock signal (HL) and from the corresponding enable signal (ATL).

8. Device according to Claim 6 taken in combination with Claim 7, **characterized in that** the third delay is at least equal to the first delay plus the response time of the corresponding address generator.

9. Device according to one of the preceding claims, **characterized in that** it forms a memory of the first-in first-out type, the address generators being counters incremented from the same initial value.

10. Process for the asynchronous sequential storage and reading of data in a memory, **characterized in that**, the memory being an asynchronous double-port random-access memory,
- successive write address information respectively associated with successive data to be stored sequentially in a predetermined order of writing, and delivered by a write address generator (CE), as well as successive read address information respectively associated with successive data to be read sequentially in a predetermined order of reading and delivered by a read address generator (CL), are delivered respectively to the input and output ports of the memory, in response to write and read enable signals, **characterized in that**
- the stable nature of the address information thus delivered is detected, so as to deliver stability signals (ADVE, ADVL) representative of the activity of the said address generators (CE, CL), and
- the level of fill of the memory is determined from this stable address information and from the said stability signals (ADVE, ADVL).

11. Process according to Claim 10, **characterized in that** a first stability logic signal representative of the stable or unstable nature of a write address produced and a second stability logic signal representative of the stable or unstable nature of a read address produced are delivered,
a level of fill in write mode is determined from the write address information item delivered and from the read address information item delivered and enabled by the second stability logic signal, as is a level of fill in read mode from the read address information item delivered and from the write address information item delivered and enabled by the first stability logic signal.

12. Process according to Claim 11, **characterized in that**, from the signal for gating the input port of the memory and from the second stability logic signal, a corresponding first control logic signal is generated, having a first value in the presence of a second stability logic signal representative of the stable nature of the corresponding read address and a second value in the presence of a second stability logic signal representative of the unstable nature of the corresponding read address,
- the read address delivered is stored in response to the first logic control signal, this stored address corresponding to a stable read address,
- the difference is taken between the write address delivered and the stable read address,
and **in that**, from the signal for gating the output port of the memory and from the first stability logic signal, a corresponding second control logic signal is generated, having a first value in the presence of a first stability logic signal representative of the stable nature of the corresponding write address and a second value in the presence of a first stability logic signal representative of the unstable nature of the corresponding write address,
- the write address delivered is stored in response to the second logic control signal, this stored address corresponding to a stable write address,
- the difference is taken between the read address delivered and the stable write address.

13. Process according to Claim 11 or 12, **characterized in that** an auxiliary gating clock signal is delivered, delayed with respect to the corresponding gating clock signal by a first predetermined delay, and **in that** the corresponding addresses are delivered in response to the corresponding auxiliary gating clock signal and to the corresponding enable signal.

14. Process according to one of Claims 10 to 13, **characterized in that** the corresponding stability logic signal is delivered from the corresponding gating clock signal and from the corresponding enable signal, and with a chosen time delay.

15. Process according to Claims 13 and 14 taken in combination, **characterized in that** the time delay is chosen at least equal to the first delay plus the time for producing the corresponding address.

16. Process according to one of Claims 10 to 15, **characterized in that** the data are stored and read in the same order.
